(19) Europäisches Patentamt
European Patent Office
Office européen des brevets

(11) **EP 2 900 603 B1**

(12) **EUROPEAN PATENT SPECIFICATION**

(45) Date of publication and mention
of the grant of the patent:
**23.10.2019 Bulletin 2019/43**

(51) Int Cl.:
***C02F 1/42*** *(2006.01)* ***G01N 33/18*** *(2006.01)*

(21) Application number: **13766284.7**

(86) International application number:
**PCT/EP2013/069659**

(22) Date of filing: **23.09.2013**

(87) International publication number:
**WO 2014/048862 (03.04.2014 Gazette 2014/14)**

(54) **CONTROLLING A FLUID TREATMENT SYSTEM**

STEUERUNG EINES FLÜSSIGKEITSBEHANDLUNGSSYSTEMS

COMMANDE D'UN SYSTÈME DE TRAITEMENT DE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2012 EP 12186299**

(43) Date of publication of application:
**05.08.2015 Bulletin 2015/32**

(73) Proprietor: **Brita GmbH**
**65232 Taunusstein (DE)**

(72) Inventors:
• **WEIDNER, Peter**
**92444 Rötz (DE)**
• **CONRADT, Berthold**
**65205 Wiesbaden (DE)**

• **NAGEL, Thomas**
**35796 Weinbach (DE)**
• **RAZIN, Denis**
**65199 Wiesbaden (DE)**
• **BUITER, Joris**
**65232 Taunusstein (DE)**

(74) Representative: **van Lookeren Campagne, Constantijn August**
**Meissner Bolte Patentanwälte**
**Rechtsanwälte Partnerschaft mbB**
**Bankgasse 3**
**90402 Nürnberg (DE)**

(56) References cited:
**EP-A1- 1 834 927        WO-A1-2007/132170**
**WO-A2-2010/099910      US-A1- 2006 060 512**
**US-A1- 2012 132 573**

EP 2 900 603 B1

**Description**

The invention relates to a method of controlling a fluid treatment system.

The invention also relates to a system for controlling a fluid treatment apparatus.

The invention also relates to a fluid treatment system.

The invention also relates to a fluid treatment cartridge according to the preamble of claim 1.

The invention also relates to a method of providing a plurality of such fluid treatment cartridges.

The invention also relates to a computer program.

WO 2010/099910 A2 discloses a method of operating a water softening apparatus provided with an automatically adjustable blending device for mixing a blended water flow from a first, softened water sub-flow and a second sub-flow carrying untreated water. The apparatus is provided with an electronic regulating device. The electronic regulating device controls the adjustment position of the blending device by means of one or more experimentally determined current measurement variables, such that the water hardness in the blended water flow is set to a prescribed target value. The blending device provides one or more water-drawing stations with blended water. The target value is prescribed by a setting of the one or more water-drawing stations and communicated to the regulating device. In an embodiment, the target value is communicated by a wireless data transfer mechanism to the electronic regulating device of the water softening apparatus.

A problem of the known method is that it requires the manufacturers of water-drawing stations, by which are typically meant appliances such as coffeemakers, steam cookers and the like, to add a network interface to the appliance and to agree on a data protocol with the supplier of the water softening apparatus. Because this makes these appliances more expensive and ties their manufacturer to a particular supplier of water softening apparatus, a user of the water softening apparatus is unlikely to find many suitable appliances.

US 2006/0060512 A1 discloses a fluid treatment system, sin which fluid to be treated flows through a conduit. A sensor monitors a characteristic (e.g. velocity) of the fluid flowing through the conduit and communicates data to a logic device. Also secured to the conduit is a treatment device in fluid communication with the conduit; in this case, the treatment device is a bag containing an additive to be dispensed into the fluid being treated. The treatment device includes an RFID tag including data specific to the treatment device (e.g. data identifying the contents of the device); this data is also communicated to the logic device. The logic device evaluates the data communicated from the sensor and that from the RFID tag, and in response sends a signal to a solenoid valve that separates the treatment device and the conduit, instructing the valve to open or close and thereby selectively controlling the release of additive into the fluid of the conduit. The fluid treatment system may be an automated detergent dispensing system for a clothes washing machine. In such case, the conduit connects with a water supply for the washing machine. The treatment device contains detergent to be added to the water. The RFID tag would indicate, for example, the amount of detergent to be added for each gallon of the water and the viscosity of the detergent. The conduit would include a sensor to monitor water flow rate into the washing machine. These data are communicated to the logic device for evaluation. In response to this evaluation, the logic device instructs the solenoid valve to open intermittently, the frequency of operation being appropriate to achieve the desired ratio of detergent to water.

EP 1 834 927 A1 discloses an apparatus for water conditioning with a housing closed in a watertight manner; a water inlet conduit connectable to an external water conduit; a water outlet conduit connectable to an external water conduit; a conditioning section comprising a conditioning medium through which water flows in use; and a blending device for blending the conditioned water with unconditioned water or water conditioned differently in a blending ratio that represents the ratio of the amount of conditioned water to the amount of unconditioned water; and an adjustment device for adjustment of the blending ratio. The adjustment device is operable in a self-actuated manner by the apparatus in dependence on at least one operating parameter of the apparatus in the course of its operation. To accomplish a replacement of the filter medium by means of a replaceable element as quickly as possible and with little effort, a connection element remaining in the water conduit is provided in addition the replaceable element. In an embodiment, a communication element is provided in the replaceable element.

It is an object of the invention to provide a method and system for controlling a fluid treatment system, a fluid treatment system, fluid treatment cartridge, method of providing a plurality of fluid treatment cartridges and computer program that enable users of the fluid treatment system to adjust it to the appliance in which the mix of treated and further fluid is to be used with little or no user input but without requiring adaptations of the appliances to the fluid treatment system.

This object is achieved according to a first aspect by the method of controlling a fluid treatment system according to the invention, which is defined in claim 4.

Because the step of obtaining a target value as input includes reading data from a machine-readable tag with which the cartridge is provided, this data need not be communicated from an appliance to the system carrying out the method. Thus, it is the cartridge rather than the appliance that is adapted, in that it carries the tag. Furthermore, the user need neither input information for obtaining the target value nor identify the appliance, so that little or no user input is required to provide the appropriate mix of treated and further fluid at the outlet. This has the additional effect that any user controls included in the system carrying out the method can be relatively simple.

Fluid treatment cartridges generally include fluid treatment parts for treating fluid led through the fluid treatment part to a slowly varying or fixed extent, e.g. to remove undesirable components or add components. Thus, where the appliance requires a different degree of treatment, blending with fluid that bypasses a certain fluid treatment part is a simple way of setting the degree of treatment. Thus, a fraction of a mix of fluid led from the inlet of the outlet is adjusted. This fraction is constituted by fluid led from the inlet to the outlet through at least a certain one of the at least one fluid treatment parts. The mix further includes fluid led from the inlet to the outlet so as to bypass at least the certain fluid treatment part. This further fraction of the mix of fluid is treated differently from that making up the fraction that is adjusted, or not treated at all. As part of the method, settings of a device for adjusting the fraction are caused to be adjusted in accordance with the target value. The target value may be one of a target value for such settings and a target value for the settings.

Since the fluid treatment cartridge is replaceable, the same fluid treatment apparatus can be used to implement different types of treatment, simply by using a cartridge with an appropriate fluid treatment part. A range of cartridges, each tailored to a particular application, is therefore commonly provided by suppliers of fluid treatment. In accordance with the methods outlined herein, the different types of cartridge further have tags affixed thereto. The tags record different target values relating to a property of the mix of treated and further fluid (as opposed to a target value merely relating to conditions under which the cartridge is to be operated). Since the property is closely tied to the type of treatment to be carried out, the range of cartridge types can remain within acceptable bounds. In any case, the machine-readable tag can be attached to the cartridge or have data recorded thereon upon attachment at a relatively late stage in the manufacturing process.

The target value is a value representative of a value of a parameter of the fluid mix.

Compared to a target value prescribing a particular value of the fraction or another device setting, this has the effect of allowing a mix of fluids to be provided that has the has the appropriate properties for a particular appliance receiving the mix if the supplier of the cartridge has no knowledge of the properties of the untreated fluid. Certain types of fluid to be treated may also have properties varying widely between suppliers thereof, as is the case for example for tap water supplied at different locations. In that case, it may not suffice to prescribe a particular blending ratio for the mix.

Receiving at least one measurement signal and determining a value of the parameter of at least one of the fluid to be treated and the fluid mix on the basis of at least the at least one measurement signal allows the parameter actually to be regulated or controlled. In the case of a parameter of the fluid mix, it can be controlled directly to achieve the target value. In the case of a parameter of the fluid to be treated, i.e. the fluid received at the inlet prior to treatment by the certain fluid treatment part, the appropriate blending ratio in the mix can be derived from the determined parameter value and the target value. If the system carrying out the method makes the determination, there is no need to provide a user interface for receiving a value of the parameter of the fluid to be treated from a user or person setting up the system. There is also no need to configure an interface for receiving such a value from an external source. Moreover, the value of the parameter can be determined repeatedly, to take account of variations in the properties of the fluid to be treated over time.

An embodiment includes receiving the at least one measurement signal and determining the value of the parameter of at least one of the fluid mix and fluid led through the certain fluid treatment part upstream of a mixing location at which it is mixed with the fluid bypassing at least the certain fluid treatment part on the basis of at least the at least one measurement signal.

This embodiment is able to cope with changes in the effectiveness of the fluid treatment part, either by controlling the value of the parameter of the fluid mix directly or by comparing the value of the parameter of the fluid led through the certain fluid treatment part upstream of a mixing location (but perforce downstream of the fluid treatment part) with a value representative of the value of the parameter of fluid yet to be treated.

The certain fluid treatment part includes a medium for treatment of the fluid by sorption.

This is an implementation which benefits from the fact that the degree of sorption is difficult to vary directly. Although it would be possible to vary the contact time with the fluid treatment medium, this would result in variations in throughput. Thus, in such cases, variations are easier to effect by blending fully treated with untreated fluid or fluid treated to a lesser extent. In the present context, the treatment by sorption includes ion exchange.

In a particular variant, the fluid treatment medium includes an ion exchange material at least partly in hydrogen form.

This type of fluid treatment medium is suitable for removing components contributing to carbonate (or temporary) hardness in water, but has the effect of lowering the pH of the water. Acid water is corrosive. Thus, to protect the appliances using the fluid provided at the outlet, a blend appropriate to achieve a balance between protecting against scaling and protecting against corrosion is to be provided. The target value can be a value indicative of the pH or degree of carbonate hardness, for example. It may alternatively be a value representative of a blending fraction, being the proportion of the volume of the fluid provided at the outlet within a certain time period that has bypassed the certain fluid treatment part. This would be appropriate where the blending fraction should in any case be very low or where the method is to be applied only in regions with a uniform supply of water.

An embodiment in which the fluid is a liquid further includes determining a value of the parameter of the liquid on the basis of at least one value of a measurement signal carrying values representative of a parameter of the liquid depending on at least a concentration of components removable by the certain fluid treatment part.

This embodiment is appropriate where the parameter of the fluid is difficult or impossible to measure directly, or where it cannot be measured directly on-line and the further parameter can be measured on-line. An example would be the hardness of water, which can be determined by titration but not measured directly on-line, whereas electrical conductivity sensors, including also ion-selective sensors, can be used on-line.

In a variant, values of the measurement signal are representative of at least one of:

electrical conductivity; and
electrical conductivity adjusted for deviation of a temperature of the liquid from a reference temperature.

The electrical conductivity of a liquid is a suitable variable, because it is relatively easy to measure and depends on the concentration of dissolved or suspended components in the liquid. Thus, it is suitable for use with fluid treatment parts that add or remove such components to or from the liquid. If the values of the measurement signal are representative of electrical conductivity adjusted for deviation of a temperature of the fluid from a reference temperature, then the method need not involve carrying out such an adjustment. The parameter can be determined more accurately on the basis of the further parameter, because the measurement signal is more accurately dependent only on the concentration of dissolved components, rather than being dependent also on the activity coefficients, which vary with temperature.

According to the invention, the parameter of which the value is determined is the hardness of water or corresponds to a measure of the concentration of components contributing to temporary hardness in water.

The method is particularly suitable for this implementation. Hardness in water is due to magnesium and calcium ions. It comprises two components, namely temporary and permanent hardness. Temporary hardness or carbonate hardness (the two terms are used interchangeably herein) is caused by dissolved minerals with carbonate and hydrogen carbonate anions, whereas permanent hardness is associated with minerals comprising other anions, such as chloride. Common treatment parts to remove temporary hardness inexpensively remove components contributing to temporary hardness to a fixed extent and generally make the water more acidic. Thus, blending to achieve a target value of the acidity level or of a measure of the temporary hardness is appropriate to provide water with suitable properties to appliances connected to the fluid treatment system.

In an embodiment, the data is caused to be read from the tag wirelessly.

An effect is that the method is not reliant on the user to connect a wire to the cartridge. Moreover, it can be implemented with liquids in environments where spillages are liable to occur. The cartridge need not be provided with an electrical connector either.

In a variant, the data is caused to be read from the tag by a device for communicating data via electromagnetic waves in a radio-frequency range.

An effect is that the method is not reliant on a line of sight between the tag and the apparatus provided with the interface for receiving the cartridge. The tag can be provided inside a plastic housing of the cartridge, for example. The method is also more robust in dirty environments.

According to another aspect, a system for controlling a fluid treatment apparatus as defined in claim 8 is provided.

Obtaining the target value does not require the system to be provided with either a user interface accessible to the user or an interface for communicating with appliances to be provided with the fluid mix.

According to another aspect, a fluid treatment system according to claim 9 is provided.

According to another aspect, a fluid treatment cartridge as defined in claim 1 is provided.

Because the target value is a value representative of a value of a parameter of the fluid mix, the target value is not limited to a particular type of apparatus. It merely specifies the value that the apparatus is to achieve by controlling adjustable components for setting the fraction of fluid led through the certain fluid treatment part in the fluid mix.

The certain fluid treatment part includes a medium for treatment of the fluid by sorption.

This makes the fluid treatment cartridge relatively simple. The degree to which fluid led through the fluid treatment part is treated to remove certain components is fixed or at least decreases only slowly over time. There need be no features for adjusting the degree of treatment in the cartridge. Instead, the apparatus in which it is placed includes components for adjusting a fraction of fluid led through the fluid treatment part of the fluid treatment cartridge in the mix further comprising fluid that has bypassed the fluid treatment part. Thus, it is still possible to provide fluid with a certain desired concentration of components removable by sorption.

In an embodiment, the fluid treatment medium includes an ion exchange material at least partly in hydrogen form.

This type of material is suitable for removing carbonate hardness. Since it also makes water more acidic, setting a target value for the pH or carbonate hardness of the mix of treated and untreated water is useful. It is thus possible to provide water that is not too corrosive for the appliances using it, nor too acidic or alkaline for a particular application (making coffee or tea, for example).

In an embodiment, the tag is configured for wireless transfer of the data.

This simplifies the cartridge in the sense that it need not be provided with connectors. It can further be a cartridge for the treatment of liquids without requiring elaborate measures to isolate leads or connectors from the liquid.

In a variant, the tag is configured for transfer of the data via electromagnetic waves in a radio-frequency range.

An effect is that a line of sight to the tag is not required. It follows that the cartridge can also be used in environments in which dust is liable to accumulate on the cartridge. Moreover, there is a greater degree of flexibility in terms of the location of the tag. Typically, a fluid treatment cartridge will have an interface at one end, which is at least partially inserted into a filter head. The tag can be located in a section at the end inserted into the filter head, with a device for reading and/or writing data to the tag situated in the filter head. Consequently, the tag and the device will be quite close together. In a variant, the tag includes a memory device. In a particular variant, the tag is configured to enable data to be written to the memory device. This affords the manufacturer greater flexibility in that target values can be written to the memory device after the tag has been incorporated in the cartridge. Moreover, data can be written to the tag during use of the cartridge in the fluid treatment system.

According to another aspect, in the method of providing a plurality of fluid treatment cartridges according to the invention, at least two of the fluid treatment cartridges are provided with a respective machine-readable tag recording data including data representative of a target value differing between the fluid treatment cartridges.

Thus, each fluid treatment cartridge carries a tag recording a target value appropriate for a specific application of the fluid treated using the fluid treatment cartridge.

An embodiment of the method includes providing the cartridges with visually perceptible indications, each associated with the target value and differing according to the associated target value.

A user effectively provides input to the fluid treatment system through his selection of a particular fluid treatment cartridge, rather than by inputting data via a user interface. To enable the user to make the correct selection, the visually perceptible indications, e.g. in the form of labels fixed to cartridge housings, are provided.

According to the invention, the data representative of the target values are transferred to machine-readable tags carried by the cartridges.

The target values are recorded at a relatively late stage of the production process, allowing a manufacturer to provide cartridges for a relatively wide range of applications in a flexible manner.

According to another aspect of the invention, there is provided a computer program including a set of instructions to cause a system according to the invention to carry out a method according to the invention.

The invention will be explained in further detail with reference to the accompanying drawings, in which:

Fig. 1 is a very schematic diagram of a liquid treatment system including a replaceable liquid treatment cartridge;
Fig. 2 is a flow chart showing steps in a method of controlling the operation of the liquid treatment apparatus.
Fig. 3 is a simple diagram of a fluid treatment system for the purpose of explaining methods of determining a measure of a concentration of components removable by a liquid treatment part in the liquid treatment cartridge.

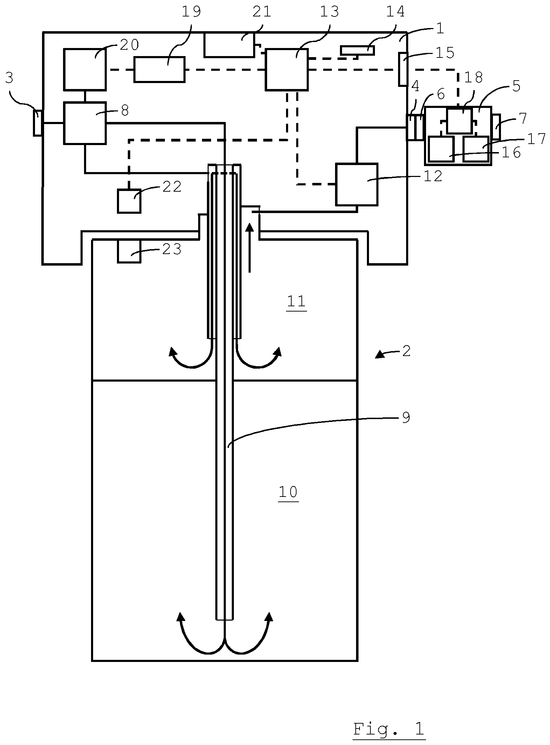

As an example of a fluid treatment system, a liquid treatment system including a filter head 1 and a replaceable cartridge 2 is shown in Fig. 1. The filter head 1 and cartridge 2 are provided with a mechanical interface for locking the cartridge 2 to the filter head 1 in a releasable manner. Seals provide a fluid-tight connection for transferring liquid to the cartridge 2 for treatment in a liquid treatment part comprised therein and for transferring the liquid back to the filter head 1. In the example, the liquid treatment system is a system for softening water, but it may be adapted to remove other components from other types of liquids, or indeed to add components.

The filter head 1 is provided with an inlet connector 3 for connection to a source of untreated water, e.g. the mains water supply. The filter head 1 further includes an outlet connector 4 for connection to a conduit (not shown). In use, at least partially treated (i.e. softened) water is supplied to one or more appliances via a connected conduit. These appliances may include steam cookers, devices for the preparation of beverages such as tea, coffee or post-mix beverages (cola and the like), dish washers, etc. Depending on the type of use of the water in the appliance, different demands are placed on the composition of the water. For example, water for preparing beverages should be primarily neutral. Water for dish washers and steamers should not be too corrosive, but also as soft as possible.

In the illustrated embodiment, the outlet connector 4 is not directly connectable to the conduit. A sensor device 5 is coupled to the outlet connector 4 via an inlet connector 6 thereof. An outlet connector 7 of the sensor device 5 is connectable to the conduit or conduits leading to the appliances.

First and second fluid paths lead through the liquid treatment system from the inlet connector 3 to the outlet connector 4. Water received through the inlet connector 3 is led to a variable-ratio flow divider 8, where the first and second fluid paths split. A first fluid path leads through an outlet of the filter head 1 through an inlet of the cartridge 2 down a fall tube 9 to a first bed 10 of at least one liquid treatment medium.

The first bed 10 of liquid treatment medium includes liquid treatment medium in particulate form. The liquid treatment medium includes at least one type of ion exchange resin, in particular a cation exchange resin in the hydrogen form. The cation exchange resin may be of the weakly acidic type. At least initially, the first bed 10 of liquid treatment medium is effective to remove all temporary hardness from the water passing through it.

Calcium and magnesium ions are removed from the water in exchange for hydrogen ions. The hydrogen ions react with carbonate and hydrogen carbonate ions, in the latter case forming water and carbon dioxide. As a result, the total ion concentration is reduced, causing a marked change in the electrical conductivity of the water. The pH of the water is also reduced.

The second fluid path bypasses the first bed 10 of liquid treatment medium. Instead, the water is led from the variable-ratio flow divider 8 to a different outlet of the filter head, then through a second inlet of the cartridge 2 to a second bed 11 of liquid treatment medium. The second bed 11 of liquid treatment medium is situated downstream of the first bed 10. It thus forms a mixing location where the first and second fluid paths join so as to mix the water that has passed through the first bed 10 of liquid treatment medium with the water that has bypassed the first bed 10 of liquid treatment medium.

The second bed 11 of liquid treatment medium may contain the same media as the first bed 10. In that case, it would be so shallow that water led through the second bed 11 is treated to a different extent than water led through both, because the contact time of the water bypassing the first bed 10 of liquid treatment medium with the ion exchange material is too short. In another embodiment, a different liquid treatment medium is included in the second bed 11. It may still include a medium for the treatment of water by sorption, e.g. activated carbon. Alternatively or additionally, it may include a medium for adding components to the water. In particular, it may be configured to release buffering agents. For example, it may include a cation exchange medium loaded with potassium, which is released in exchange for calcium and magnesium and serves to stabilise the pH of the water at a value within a certain range. A lower bound of the certain range may be a value between 5 and 7. An upper bound of the certain range may be a value between 7 and 9, for example. The buffering agents may be depleted long before the cation exchange medium in the first bed 10 of liquid treatment medium is depleted, since it is primarily at the beginning of the lifecycle of the latter medium that the pH would otherwise be lowered significantly.

For purposes of explanation, the water bypassing the first bed 10 of liquid treatment medium will be referred to herein as "untreated", whereas the water that has passed through the liquid treatment part formed by the first bed 10 of liquid treatment medium will be referred to as "treated".

From the mixing location, the mix of treated and untreated water is led through an outlet of the cartridge 2 and an inlet of the filter head 1 past a flow meter 12 to the outlet connector 4.

The flow meter is configured to measure one of the volumetric flow rate and the accumulated volume flow.

The operation of the liquid treatment system is controlled by the filter head 1, which includes a data processing unit 13 and memory 14. The data processing unit 13 receives a signal from the flow meter 12. It also receives a signal from the sensor device 5 through an interface 15.

The sensor device 5 includes an electrical conductivity sensor 16 and a temperature sensor 17. It further includes a processor 18 for converting electrical conductivity values into values that would have pertained if the temperature had been at a certain reference temperature, e.g. 25°C. The correction in dependence on deviations from the reference temperature takes account of the fact that the electrical conductivity for a given ion concentration varies with temperature. Since the electrical conductivity is used to determine a measure of the concentration of components removable by the liquid treatment medium in the first bed 10, the correction improves the accuracy with which this determination can be made without requiring the provision of a temperature signal to the data processing unit 13. This saves on leads and connectors.

In an alternative embodiment, the sensor device 5 includes a temperature-dependent element and is configured to provide an analogue signal that is already normalised to a particular reference temperature. In that case, the processor 18 can be dispensed with and the analogue signal need only be sampled and digitalised.

The data processing unit 13 is programmed to use the temperature-adjusted electrical conductivity values (referred to as electrical conductivity values hereinafter) to adjust the ratio of untreated to treated water in the mix of water so as to achieve a particular target value.

The proportion of water led through the second fluid path in the mix of treated and untreated water is referred to as the blending fraction x. It can be adjusted by adjusting the settings of the variable-ratio flow divider 8, to which end the data processing unit 13 is connected to an interface 19 to an electrical motor 20 or similar actuator. The electrical motor 20 can be a servo motor or a stepper motor augmented by sensors (not shown), for example.

The filter head 1 includes at least one further interface 21, which may include at least one of a human-machine interface and a communication interface for exchanging data with an external device or appliance. In particular, output signals may be provided via the further interface 21.

The filter head 1 is also provided with a device 22 for reading data from a machine-readable tag 23 with which the cartridge 2 is provided. In the embodiment to be discussed herein, the tag 23 and device 22 are also configured to enable the device 22 to write data to the tag 23 for storage in a nonvolatile memory component included therein. The tag 23 in this example is an RFID (Radio Frequency Identification Device) tag, in particular of the passive type. It may be included in a package fixed to the outside of a housing of the cartridge 2. Alternatively, the housing of the cartridge 2 may be made of plastic and the package including the tag 23 embedded in the housing or affixed to the inside of the housing. If the tag 23 is placed in the region of the mechanical interface elements of the cartridge 2, such as a part of the cartridge 2 inserted into a receiving space of the filter head 1, the signals required to read and write data from and to the tag can be quite weak.

The cartridge 2 is further provided with one or more visually perceptible indicia associated with the type of use for which it is intended. This may include a printed description of the type of application, or the housing of the cartridge may have a colour dependent on the type of application. For example, there may be one type of get-up for cartridges intended for treating water to be used in machines for preparing beverages and a different type of get-up for cartridges intended for treating water to be used in other types of appliances. The latter include appliances in which the water is heated for a different purpose than preparing hot beverages, e.g. steamers, dish washers, cookers and the like.

A target value associated with the type of application is also recorded in the tag 23 for reading by the device 22. The value may include an identifier associated with the type of application, which is linked to a further target value in a table stored in memory 14 in the filter head 1. So as not to have to re-program the filter head 1 whenever specifications change, the target value will in most embodiments be useable to set a target for a control algorithm carried out in the liquid treatment system independently of any data stored in the system effecting the control algorithm. It may be one of a setting for a component of the liquid treatment system and a value of a parameter of the mix of treated and untreated liquid to be provided by the system. An example of the former would be a value representative of a target value of the blending fraction x or representative of a setting of the variable-ratio flow divider 8. Such target values are common in applications in which the mix of untreated and treated water is not provided to an appliance for preparing beverages, but to one in which steam is primarily generated. In such appliances a relatively low value of the blending fraction x, e. g. 10 % is generally appropriate, since the primary concern is to prevent scaling. In other applications, the target value would be a value associated with a particular composition of the mix of treated and untreated water, in particular the temporary hardness or pH. In that case, the system effecting the control algorithm determines appropriate settings of the variable-ratio flow divider 8 to achieve the target value by determining this property, for the treated, the untreated or the mix of treated and untreated water.

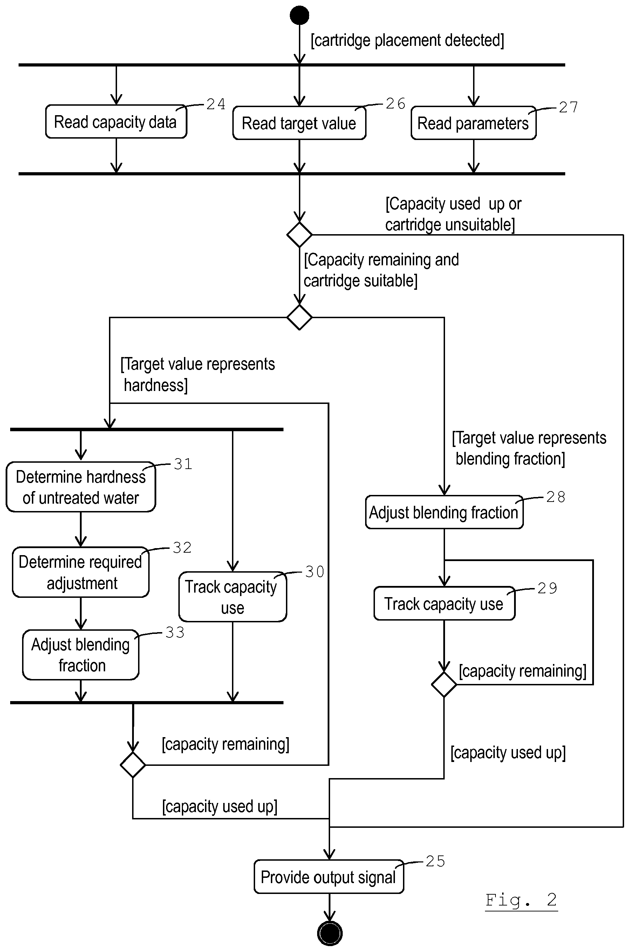

As an example of a method carried out by the control system included in the filter head 1, Fig. 2 shows that, upon detecting the placement of a cartridge 2 in the liquid treatment system, capacity data are read (step 24) from the tag 23. These data include data enabling the system to determine whether there is any capacity left for treating the water. It may include a value indicative of an initial capacity of the liquid treatment cartridge 2 and a value indicative of use of that capacity from a start of a lifecycle of the cartridge 2. If there is no capacity remaining, meaning that the liquid treatment medium in the first bed 10 is exhausted, the method stops after an output signal has been provided (step 25) via the further interface 21.

The target value is also read (step 26) from the tag 23. Further parameters are read from the tag 23 in an optional step 27. Such parameters may be required in methods for determining the temporary hardness of the untreated water using only the sensor device 5. They include information relating to the type of liquid treatment medium. In particular, they may include information enabling the filter head 1 to determine whether the cartridge 2 is suitable for the method of determining the temporary hardness of the untreated water that it is programmed to carry out. If the cartridge is unsuitable, then the method also continues with the step 25 in which an error signal is provided through the further interface 21.

If there is sufficient capacity left, the cartridge 2 is suitable and the target value is a value of the blending fraction x, then the blending fraction is adjusted (step 28) to this target value. The liquid treatment system is operated at this setting. In an embodiment a table linking settings of the variable-ratio flow divider 8 or the motor 20 to values of the blending fraction x is stored in memory 14 and used to adjust the blending fraction x to the target value. In a particular embodiment, such a table is compiled using a method set out more fully in pending international patent application No. PCT/EP2013/067761, filed on 28 August 2013 by the same applicant as the present application. In an alternative embodiment to the one shown in the drawings, flow sensors placed in the first and second fluid paths upstream of the interface to the cartridge 2 are used to determine the value of the blending fraction x.

During operation of the liquid treatment system, the use of the available capacity of the cartridge 2 is tracked (step 29). This involves continually determining the value of a usage parameter corresponding to an integral of a variable from a point in time at which liquid treatment medium in the liquid treatment part is in an initial state over periods during which liquid flows through the liquid treatment part in the cartridge 2, wherein the variable is at least dependent on one of a rate at which liquid flows through the liquid treatment part during use and a rate at which liquid flows through the liquid treatment system during use. In one embodiment, the parameter corresponds to the accumulated volume of water that has flowed through the liquid treatment cartridge 2, which may be weighted by the temporary hardness of the untreated water. In another embodiment, the parameter corresponds to the accumulated volume of water that has flowed through the liquid treatment part only, in this example through the first bed 10 of liquid treatment medium, again optionally weighted by the temporary hardness of the untreated water. The volume flow through the cartridge 2 is determined using the flow meter 12. The volume flow through the first bed 10 only is determined using in addition knowledge of the blending fraction x. The temporary hardness is determined using any of a number of possible methods to be outlined below.

The initial value of the usage parameter is read from the tag 23 in the step 24 carried out at the start of the method. This value is then added to during use of the cartridge 2. Updated values are written to the tag 23. Thus, the cartridge 2 can be removed during use and then placed back in the same or a different filter head 1 at any point during its lifecycle.

Once the usage parameter has reached a maximum value also read from the tag 23 in the initial step 24, the method continues with the final step 25 in which an output signal is provided through the further interface. This signals to the user that the cartridge 2 is to be replaced by a new cartridge and returned to the supplier for regenerating the liquid treatment medium contained therein.

If the target value read initially (step 26) is not directly representative of the blending fraction x but of a property of the mix of treated and untreated water, then the variable-ratio flow divider 8 is controlled differently. The use of the available capacity is tracked (step 30) in the same manner as in the corresponding step 29 discussed above.

It would be possible to determine the hardness of the mix of treated and untreated water directly using the electrical conductivity values received from the sensor device 5 and a table or function for converting these values into hardness values. This method relies on a fixed ratio of temporary hardness-inducing components to other minerals in the untreated water or the use of a table or function adapted to the local water supply, which may not vary.

In the illustrated example, the hardness of the untreated water is determined (step 31), the required adjustment in blending fraction x to achieved the target value is determined (step 32) and the blending fraction x is adjusted by adjusting the variable-ratio flow divider 8. These steps 31-33 are repeated, e.g. at regular intervals or upon detecting a certain pattern in the signal received from the sensor device 5. Once the available capacity has been used up, the method again proceeds to the final step 25 in which a signal to replace the cartridge 2 is provided via the further interface 21.

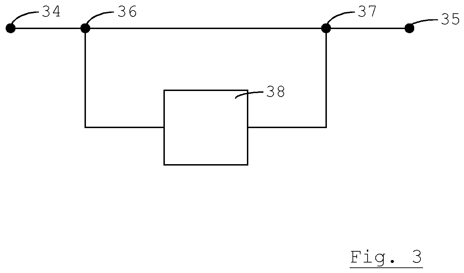

The step 31 of determining the temporary hardness of the untreated water can be carried out in any one of a number of ways. To explain this, reference is made to a schematic diagram of a simple liquid treatment system in Fig. 3. Liquid flows from an inlet 34 to an outlet 35 via a first or second fluid path. The first and second fluid paths separate at a splitting location 36 and join at a mixing location 37 such as to mix the liquid led through the first path with that led through the second path. A liquid treatment part 38 is provided only in the first fluid path. It is configured to remove certain components, in this example those inducing temporary hardness, to a certain extent from the liquid led through it. For simplicity, the liquid led through the second path is left untreated.

Let the electrical conductivity of the untreated liquid be $s_0$ and that of the fully treated liquid flowing between the liquid treatment part 38 and the mixing location 37 be $s_1$. The electrical conductivity $s(x)$ of the mix of liquid downstream of the mixing location 37 at a given value of the blending fraction can be written as follows:

$$s(x) = x \cdot s_0 + (1-x) \cdot s_1 = (s_0 - s_1) \cdot x + s_1 = \Delta s \cdot x + s_1 \qquad (1)$$

Here, $\Delta s = s_0 - s_1$ is the change in electrical conductivity due to the treatment in the liquid treatment part 38, corresponding to the contribution of the temporary hardness-inducing components of the untreated liquid to the total electrical conductivity of the untreated liquid. It can be converted to a measure of the temporary hardness by dividing it by a factor $F$. The factor $F$ may be a constant, e.g. 30 $\mu$S/°dH, where dH stands for deutsche Harte. More accurate conversions are possible by using a variable conversion factor F dependent on the electrical conductivity of at least one of the untreated liquid, the treated liquid and the mix of treated and untreated liquid. One example is a conversion factor F decreasing linearly with the electrical conductivity value used, as explained more fully in international patent application No. PCT/EP2013/064112, filed on 4 July 2013 by the same applicant as the applicant for the present application.

To arrive at a value for the change $\Delta s$ in electrical conductivity due to the treatment carried out by the liquid treatment part 38, a method using only a sensor device downstream of the mixing location 37, as might be used in the liquid treatment system of Fig. 1, involves making small changes to the blending fraction $x$. In essence, a value of the derivative of Equation (1), i.e. of the electrical conductivity of the mix of treated and untreated water, with respect the blending fraction x is determined:

$$s'(x) = \Delta s . \qquad (2)$$

In an alternative embodiment, a further sensor device is arranged to measure the electrical conductivity $s_0$ of the untreated water. With knowledge of the blending fraction $x$ and the electrical conductivity $s(x)$ of the mix of treated and untreated water downstream of the mixing location, the change $\Delta s$ in electrical conductivity due to the treatment carried out by the liquid treatment part 38 can also be determined and converted into a measure of the concentration of the components removable by the liquid treatment part 38. In yet another alternative embodiment, this difference $\Delta s$ is measured directly by placing sensor devices upstream and downstream of the liquid treatment part 38, with at least the downstream sensor device being located upstream of the mixing location 37. This is implements most easily by situating the mixing location in the filter head 1 and configuring the filter head 1 and cartridge 2 in such a way that the second fluid path bypasses the cartridge 2 altogether.

Where the temporary hardness is not completely removed from the liquid in the liquid treatment part or it is removed to a lesser degree by a further liquid treatment part in the second fluid path as well, the value determined using any of the methods above to approximate the change $\Delta s$ in electrical conductivity is multiplied by a factor taking this into account, as well as by the conversion factor $F$.

Regardless of the method used, the value of the temporary hardness of the untreated water is used to determine an appropriate value of the blending fraction $x$ for achieving the target value read from the tag 23 with which the cartridge 2 is provided. Thus, the user need not input a target value, nor need it be communicated to the filter head 1 by a further appliance.

The invention is not limited to the embodiments described above. For example, the way in which the target value of the temporary hardness is achieved may vary during the lifecycle of the cartridge as described more fully in international patent application No. PCT/EP2013/067759, filed on 28 August 2013 by the same applicant as the applicant for the present application. Thus, the temporary hardness of the untreated water may be calculated to determine the required adjustment in blending fraction $x$ to achieve the target value for a certain interval in the lifecycle of the cartridge 2 whereas the electrical conductivity of the mix of treated and untreated liquid is used directly during a further interval in the lifecycle of the cartridge 2. Control of the blending fraction $x$ in accordance with the target value may also be suppressed or suspended during certain intervals in the lifecycle of the cartridge 2 as determined by the usage parameter. The method can be implemented in systems for removing permanent hardness or completely demineralising liquids such as water in an analogous way, since the type of treatment depends essentially only on the liquid treatment carried out in the cartridge 2.

LIST OF REFERENCE NUMERALS

1 - Filter head

2 - Liquid treatment cartridge

3 - Inlet connector

4 - Outlet connector

5 - Sensor device

6 - Inlet connector of sensor device

7 - Outlet connector of sensor device

8 - Variable-ratio flow divider

9 - Fall tube

10 - First bed of liquid treatment medium

11 - Second bed of liquid treatment medium

12 - Flow meter

13 - Data processing unit

14 - Memory

15      - Interface to sensor device

16      - Conductivity sensor

17      - Temperature sensor

18      - Processor

19      - Interface to motor

20      - Motor

21      - Further interface

22      - Read/write device

23      - Machine-readable tag

24      - Step (Read capacity data)

25      - Step (Provide output signal)

26      - Step (Read target value)

27      - Step (Read parameters)

28      - Step (Adjust blending fraction)

29      - Step (Track capacity use)

30      - Step (Track capacity use)

31      - Step (Determine hardness of untreated water)

32      - Step (Determine required adjustment)

33      - Step (Adjust blending fraction)

34      - Inlet

35      - Outlet

36      - Splitting location

37      - Mixing location

38      - Liquid treatment part

## Claims

1.  Fluid treatment cartridge for use in a fluid treatment system including an apparatus (1) provided with an inlet (3) for receiving a fluid to be treated, an outlet (4) for providing at least partially treated fluid and an interface for receiving the fluid treatment cartridge so as to allow fluid received through the inlet (3) to be led through the cartridge (2) and back to the outlet (4),
    wherein the fluid treatment cartridge includes at least one fluid treatment part (10,11) for treating fluid led through the fluid treatment part (10,11), and
    wherein a certain one of the fluid treatment parts includes a medium for treatment of the fluid by ion exchange,

**characterised in that**

the fluid treatment cartridge is provided with a machine-readable tag (23) having data recorded thereon that include data representative of a target value for a system that includes at least an interface to a device (22) for reading data from the machine-readable tag (23) with which the cartridge (2) is provided,

wherein the target value is a value representative of a parameter of a mix of fluid including a fraction of fluid led through at least the certain one of the at least one fluid treatment parts (10) and further including fluid led from the inlet (3) to the outlet (4) so as to bypass at least the certain fluid treatment part (10),

the parameter being the hardness of water or corresponding to a measure of the concentration of components contributing to temporary hardness in water,

the system being configured to:

(i) cause data to be read from the machine-readable tag (23) to obtain the target value,

(ii) receive at least one measurement signal and determine a value of the parameter of at least one of the fluid to be treated and the fluid mix on the basis of at least the at least one measurement signal;

(iii) determine values of a signal for causing an adjustment of settings of a device (20,8) for adjusting the fraction of fluid led through at least a certain one of the at least one fluid treatment parts (10, 11) in the mix, wherein the system is configured to determine values of the signal in accordance with the received target value and the value determined on the basis of the at least one measurement signal so as to achieve the target value; and

(iv) provide the signal through an interface (19) of the system.

2. Method of providing a plurality of fluid treatment cartridges (2) according to claim 1, wherein at least two of the fluid treatment cartridges (2) are provided with a respective machine-readable tag (23) having data recorded thereon including data representative of a target value differing between the fluid treatment cartridges (2).

3. Method according to claim 2,
including providing the cartridges (2) with visually perceptible indications, each associated with the target value and differing according to the associated target value.

4. Method of controlling a fluid treatment system including an apparatus (1) provided with an inlet (3) for receiving a fluid to be treated, an outlet (4) for providing at least partially treated fluid and an interface for receiving a replaceable fluid treatment cartridge (2) according to claim 1, the method including:

obtaining a target value as input, wherein the target value is a value representative of a value of a parameter of a fluid mix including a fraction of fluid led through at least the certain one of the at least one fluid treatment parts (10) and further including fluid led from the inlet (3) to the outlet (4) so as to bypass at least the certain fluid treatment part (10),

and wherein the parameter is the hardness of water or the parameter corresponds to a measure of the concentration of components contributing to temporary hardness in water,

wherein the step (26) of obtaining a target value as input includes obtaining data from the machine-readable tag (23) with which the cartridge (2) is provided;

receiving at least one measurement signal and determining a value of the parameter of at least one of the fluid to be treated and the fluid mix on the basis of at least the at least one measurement signal; and

causing the fraction of fluid led through at least a certain one of the at least one fluid treatment parts (10, 11) in the mix to be adjusted by causing settings of a device (20,8) for adjusting the fraction to be adjusted in accordance with the target value and the value determined on the basis of at least the at least one measurement signal so as to achieve the target value.

5. Method according to claim 4,
including determining a value of the parameter of at least one of the fluid mix and fluid led through the certain fluid treatment part upstream of a mixing location (11) at which it is mixed with the fluid bypassing at least the certain fluid treatment part (10) on the basis of at least the at least one measurement signal.

6. Method according to claim 4 or 5,
wherein the fluid is a liquid,
further including determining a value of a parameter of the liquid on the basis of at least one value of a measurement signal carrying values representative of a parameter of the liquid depending on at least a concentration of components removable by the certain fluid treatment part (10).

7. Method according to claim 6,
wherein values of the measurement signal are representative of at least one of:

electrical conductivity; and
electrical conductivity adjusted for deviation of a temperature of the liquid.

8. System for controlling a fluid treatment apparatus provided with an inlet (3) for receiving a fluid to be treated, an outlet (4) for providing at least partially treated fluid and an interface for receiving a replaceable fluid treatment cartridge (2) according to claim 1, which system includes:

an interface (19) for providing a signal for causing an adjustment of settings of a device (20,8) for adjusting a fraction of fluid led through at least the certain one (10) of the at least one fluid treatment parts (10,11) in a mix of fluid further including fluid led from the inlet (3) to the outlet (4) so as to bypass at least the certain fluid treatment part (10); and
at least an interface to a device (22) for reading data from the machine-readable tag (23) with which the cartridge (2) is provided, wherein the system is configured to carry out a method according to any one of claims 4-7.

9. Fluid treatment system including:

an apparatus (1) provided with an inlet (3) for receiving a fluid to be treated, an outlet (4) for providing at least partially treated fluid and an interface for receiving a replaceable fluid treatment cartridge (2) including at least one fluid treatment part (10,11) for treating fluid led through the fluid treatment part (10,11);
a system according to claim 8;
the device (20,8) for adjusting the fraction of fluid led through at least the certain one (10) of the at least one fluid treatment parts (10,11) along a first fluid path in the mix of fluid further including fluid led from the inlet (3) to the outlet (4) along a second fluid path so as to bypass at least the certain fluid treatment part (10), wherein the device takes the form of a variable-ratio flow divider to which, in use, water received through the inlet (3) and where the first and second fluid paths split,
the device for reading data from the machine-readable tag (23) with which the cartridge (2) is provided; and
a sensor device (5) for providing the at least one measurement signal.

10. Computer program including a set of instructions to cause the system according to claim 8 to carry out a method according to any one of claims 4-7.

**Patentansprüche**

1. Fluidbehandlungskartusche zur Verwendung in einem Fluidbehandlungssystem, umfassend eine Vorrichtung (1), die mit einem Einlass (3) zum Aufnehmen eines zu behandelnden Fluids, einem Auslass (4) zum Bereitstellen eines zumindest teilweise behandelten Fluids und einer Schnittstelle zum Aufnehmen der Fluidbehandlungskartusche versehen ist, so dass das durch den Einlass (3) aufgenommenes Fluid durch die Kartusche (2) und zurück zum Auslass (4) geführt werden kann,
wobei die Fluidbehandlungskartusche mindestens einen Fluidbehandlungsteil (10, 11) zur Behandlung von durch den Fluidbehandlungsteil (10, 11) geführtem Fluid umfasst und wobei ein bestimmtes der Fluidbehandlungsteile ein Medium zur Behandlung des Fluids durch Ionenaustausch umfasst, **dadurch gekennzeichnet, dass** die Fluidbehandlungskartusche mit einem maschinenlesbaren Etikett (23) versehen ist, auf dem Daten aufgezeichnet sind, die Daten beinhalten, die einen Sollwert für ein System darstellen, das mindestens eine Schnittstelle zu einer Vorrichtung (22) zum Lesen von Daten von dem maschinenlesbaren Etikett (23) beinhaltet, mit dem die Kartusche (2) versehen ist,
wobei der Sollwert ein Wert ist, der für einen Parameter einer Fluidmischung repräsentativ ist, die einen durch mindestens das bestimmte der mindestens einen Fluidbehandlungsteile (10) geführten Fluidanteil umfasst und ferner Fluid umfasst, das vom Einlass (3) zum Auslass (4) geführt wird, so dass es den bestimmten Fluidbehandlungsteil (10) umgeht,
wobei der Parameter die Härte von Wasser ist oder einem Maß für die Konzentration der Komponenten entspricht, die zur vorübergehenden Härte in Wasser beitragen,
wobei das System eingerichtet ist um:

(i) ein Lesen von Daten aus dem maschinenlesbaren Etikett (23) zu bewirken, um den Sollwert zu erhalten,

(ii) mindestens ein Messsignal zu empfangen und einen Wert des Parameters von mindestens einem des zu behandelnden Fluids und des Fluidgemisches auf der Grundlage zumindest des mindestens einen Messsignals zu bestimmen;

(iii) Werte eines Signals zum Bewirken einer Anpassung von Einstellungen einer Vorrichtung (20, 8) zu bestimmen, zum Anpassen des Fluidanteils, der durch mindestens den bestimmten der mindestens einen Fluidbehandlungsteile (10) in der Mischung geführt wird,

wobei das System eingerichtet ist, um Werte des Signals gemäß dem empfangenen Sollwert und dem auf der Grundlage des mindestens einen Messsignals bestimmten Wert zu bestimmen, um den Sollwert zu erreichen; und

(iv) das Signal über eine Schnittstelle (19) des Systems bereitzustellen.

2. Verfahren zum Bereitstellen einer Mehrzahl von Fluidbehandlungskartuschen (2) nach Anspruch 1, wobei mindestens zwei der Fluidbehandlungskartuschen (2) mit einem entsprechenden maschinenlesbaren Etikett (23) versehen sind, auf dem Daten aufgezeichnet sind, einschließlich Daten, die einen zwischen den Fluidbehandlungskartuschen (2) unterschiedlichen Sollwert darstellen.

3. Verfahren nach Anspruch 2, umfassend das Bereitstellen der Kartuschen (2) mit visuell wahrnehmbaren Anzeigen, die jeweils dem Sollwert zugeordnet sind und sich entsprechend dem zugehörigen Sollwert unterscheiden.

4. Verfahren zum Steuern eines Fluidbehandlungssystems umfassend eine Vorrichtung (1), die mit einem Einlass (3) zur Aufnahme eines zu behandelnden Fluids, einem Auslass (4) zur Bereitstellung eines zumindest teilweise behandelten Fluids und einer Schnittstelle zur Aufnahme einer austauschbaren Fluidbehandlungskartusche (2) nach Anspruch 1 versehen ist, wobei das Verfahren Folgendes umfasst:

Erhalten eines Sollwerts als Eingabe, wobei der Sollwert ein Wert ist, der einen Wert eines Parameters einer Fluidmischung darstellt, der einen durch mindestens den bestimmten der mindestens einen Fluidbehandlungsteile (10) geführten Fluidanteil umfasst und ferner Fluid umfasst, das vom Einlass (3) zum Auslass (4) geführt wird, so dass es den bestimmten Fluidbehandlungsteil (10) umgeht,

und wobei der Parameter die Härte von Wasser ist oder der Parameter einem Maß für die Konzentration der Komponenten entspricht, die zur vorübergehenden Härte in Wasser beitragen, wobei der Schritt (26) zum Erhalten eines Sollwerts als Eingabe das Erhalten von Daten von dem maschinenlesbaren Etikett (23), mit dem die Kartusche (2) versehen ist, umfasst;

Empfangen mindestens eines Messsignals und Bestimmen eines Wertes des Parameters von mindestens einem des zu behandelnden Fluids und des Fluidgemisches auf der Grundlage zumindestens des mindestens einen Messsignals; und

Bewirken, dass der Fluidanteil in der Mischung, der durch mindestens einen bestimmten der mindestens einen Fluidbehandlungsteile (10, 11) geleitet wird, angepasst wird durch Bewirken, dass Einstellungen einer Einrichtung (20, 8) zum Anpassen des anzupassenden Fluidanteils entsprechend dem Sollwert und dem Wert, der zumindest auf der Grundlage zumindest eines Messsignals bestimmt wird, angepasst werden, um den Sollwert zu erreichen.

5. Verfahren nach Anspruch 4,
umfassend das Bestimmen eines Wertes des Parameters von mindestens einem der Fluidmischung und des durch den bestimmten Fluidenbehandlungsteil geführten Fluids, stromaufwärts einer Mischstelle (11) an der es mit dem den bestimmte Fluidbehandlungsteil (10) umgehende Fluid vermischt wird, auf der Grundlage mindestens des mindestens einen Messsignals.

6. Verfahren nach Anspruch 4 oder 5,
wobei das Fluid eine Flüssigkeit ist,
ferner umfassend das Bestimmen eines Wertes eines Parameters der Flüssigkeit auf der Grundlage wenigstens eines Wertes eines Messsignals, das Werte enthält, die für einen Parameter der Flüssigkeit repräsentativ sind, der von zumindest einer Konzentration durch den bestimmten Fluidbehandlungsteil (10) entfernbarer Komponente abhängt.

7. Verfahren nach Anspruch 6,
wobei die Werte des Messsignals repräsentativ für mindestens eines der folgenden sind:

elektrische Leitfähigkeit; und

elektrische Leitfähigkeit, angepasst an die Abweichung einer Temperatur der Flüssigkeit.

**8.** System zum Steuern einer Fluidbehandlungsvorrichtung, die mit einem Einlass (3) zum Aufnehmen eines zu behandelnden Fluids, einem Auslass (4) zum Bereitstellen eines zumindest teilweise behandelten Fluids und einer Schnittstelle zum Aufnehmen einer austauschbaren Fluidbehandlungskartusche (2) nach Anspruch 1 versehen ist, wobei das System umfasst:

eine Schnittstelle (19) zum Bereitstellen eines Signals zum Bewirken einer Anpassung von Einstellungen einer Einrichtung (20, 8) zum Anpassen eines durch mindestens den bestimmten (10) der mindestens einen Fluidbehandlungsteile (10, 11) geführten Fluidanteils in einer Fluidmischung, die ferner Fluid umfasst, das vom Einlass (3) zum Auslass (4) geleitet wird, so dass es den bestimmten Fluidbehandlungsteil (10) umgeht; und mindestens eine Schnittstelle zu einer Vorrichtung (22) zum Lesen von Daten aus dem maschinenlesbaren Etikett (23), mit dem die Kartusche (2) versehen ist, wobei das System eingerichtet ist, um ein Verfahren nach einem der Ansprüche 4-7 durchzuführen.

**9.** Flüssigkeitsbehandlungssystem, umfassend:

eine Vorrichtung (1), die mit einem Einlass (3) zum Aufnehmen eines zu behandelnden Fluids, einem Auslass (4) zum Bereitstellen eines zumindest teilweise behandelten Fluids und einer Schnittstelle zum Aufnehmen einer austauschbaren Fluidbehandlungskartusche (2) mit mindestens einem Fluidbehandlungsteil (10, 11) zum Behandeln von durch den Fluidbehandlungsteil (10, 11) geführtem Fluid versehen ist;
ein System gemäß Anspruch 8;
die Vorrichtung (20, 8) zum Anpassen durch zumindest den bestimmten (10) der mindestens einen Fluidbehandlungsteile (10, 11) entlang eines ersten Fluidpfades geführten Fluidanteils in der Fluidmischung, die ferner das Fluid umfasst, das vom Einlass (3) zum Auslass (4) entlang eines zweiten Fluidpfades geführt wird, so dass es den bestimmten Fluidbehandlungsteil (10) umgeht,
die Vorrichtung zum Lesen von Daten von dem maschinenlesbaren Etikett (23), mit dem die Kartusche (2) versehen ist; und
eine Sensoreinrichtung (5) zum Bereitstellen des mindestens einen Messsignals.

**10.** Computerprogramm, umfassend einen Satz von Anweisungen, um zu bewirken, dass das System gemäß Anspruch 8 ein Verfahren nach einem der Ansprüche 4-7 durchführt.

**Revendications**

**1.** Cartouche de traitement de fluide destinée à être utilisée dans un système de traitement de fluide comprenant un appareil (1) comportant une entrée (3) pour recevoir un fluide à traiter, une sortie (4) pour fournir un fluide au moins partiellement traité, et une interface pour recevoir la cartouche de traitement de fluide de façon à permettre à du fluide reçu à travers l'entrée (3) d'être conduit à travers la cartouche (2) et en retour jusqu'à la sortie (4),
la cartouche de traitement de fluide comprenant au moins une partie de traitement de fluide (10, 11) pour traiter du fluide conduit à travers la partie de traitement de fluide (10, 11), et
l'une, spécifique, des parties de traitement de fluide comprenant un milieu pour traitement du fluide par échange d'ions,
**caractérisée par le fait que**
la cartouche de traitement de fluide comporte une étiquette lisible par machine (23) ayant des données, enregistrées sur celle-ci, qui comprennent des données représentant une valeur cible pour un système qui comprend au moins une interface pour un dispositif (22) pour lire des données à partir de l'étiquette lisible par machine (23) dont la cartouche (2) est munie,
la valeur cible étant une valeur représentant un paramètre d'un mélange de fluide comprenant une fraction de fluide conduit à travers au moins la partie spécifique de l'au moins une partie de traitement de fluide (10) et comprenant en outre du fluide conduit de l'entrée (3) à la sortie (4) de façon à contourner au moins la partie de traitement de fluide spécifique (10),
le paramètre étant la dureté de l'eau ou correspondant à une mesure de la concentration de composants contribuant à une dureté temporaire de l'eau,
le système étant configuré pour :

(i) amener des données à être lues à partir de l'étiquette lisible par machine (23) pour obtenir la valeur cible ;

(ii) recevoir au moins un signal de mesure et déterminer une valeur du paramètre d'au moins l'un parmi le fluide à traiter et le mélange de fluide sur la base au moins de l'au moins un signal de mesure ;

(iii) déterminer des valeurs d'un signal pour entraîner un ajustement de réglages d'un dispositif (20, 8) pour ajuster la fraction de fluide conduit à travers au moins une partie spécifique de l'au moins une partie de traitement de fluide (10, 11) dans le mélange,

le système étant configuré pour déterminer des valeurs du signal selon la valeur cible reçue et la valeur déterminée sur la base de l'au moins un signal de mesure de façon à atteindre la valeur cible ; et

(iv) fournir le signal par l'intermédiaire d'une interface (19) du système.

2. Procédé pour fournir une pluralité de cartouches de traitement de fluide (2) selon la revendication 1, dans lequel au moins deux des cartouches de traitement de fluide (2) comportent une étiquette lisible par machine respective (23) ayant des données, enregistrées sur celle-ci, comprenant des données représentant une valeur cible différant entre les cartouches de traitement de fluide (2).

3. Procédé selon la revendication 2, comprenant munir les cartouches (2) d'indications perceptibles visuellement, chacune étant associée à la valeur cible et différant selon la valeur cible associée.

4. Procédé pour commander un système de traitement de fluide comprenant un appareil (1) comportant une entrée (3) pour recevoir un fluide à traiter, une sortie (4) pour fournir du fluide au moins partiellement traité, et une interface pour recevoir une cartouche de traitement de fluide remplaçable (2) selon la revendication 1, le procédé comprenant :

obtenir une valeur cible comme entrée, la valeur cible étant une valeur représentant une valeur d'un paramètre d'un mélange de fluide comprenant une fraction de fluide conduit à travers au moins la partie spécifique de l'au moins une partie de traitement de fluide (10) et comprenant en outre du fluide conduit de l'entrée (3) à la sortie (4) de façon à contourner au moins la partie de traitement de fluide spécifique (10),

et le paramètre étant la dureté de l'eau ou le paramètre correspondant à une mesure de la concentration de composants contribuant à une dureté temporaire de l'eau,

l'étape (26) pour obtenir une valeur cible comme entrée comprenant obtenir des données à partir de l'étiquette lisible par machine (23) dont la cartouche (2) est munie ;

recevoir au moins un signal de mesure et déterminer une valeur du paramètre d'au moins un parmi le fluide à traiter et le mélange de fluide sur la base de l'au moins un signal de mesure ; et

amener la fraction de fluide conduit à travers au moins une partie spécifique de l'au moins une partie de traitement de fluide (10, 11) dans le mélange à être ajustée en entraînant des réglages d'un dispositif (20, 8) pour ajuster la fraction à être ajustés selon la valeur cible et la valeur déterminée sur la base au moins de l'au moins un signal de mesure de façon à atteindre la valeur cible.

5. Procédé selon la revendication 4,

comprenant déterminer une valeur du paramètre d'au moins l'un parmi le mélange de fluide et le fluide conduit à travers la partie de traitement de fluide spécifique en amont d'un emplacement de mélange (11) au niveau duquel il est mélangé avec le fluide contournant au moins la partie de traitement de fluide spécifique (10) sur la base au moins de l'au moins un signal de mesure.

6. Procédé selon la revendication 4 ou 5,

dans lequel le fluide est un liquide,

comprenant en outre déterminer une valeur d'un paramètre du liquide sur la base d'au moins une valeur d'un signal de mesure transportant des valeurs représentant un paramètre du liquide dépendant au moins d'une concentration de composants pouvant être retirés par la partie de traitement de fluide spécifique (10).

7. Procédé selon la revendication 6,

dans lequel des valeurs du signal de mesure représentent au moins une parmi :

une conductivité électrique ; et

une conductivité électrique ajustée pour l'écart d'une température du liquide.

8. Système pour commander un appareil de traitement de fluide comportant une entrée (3) pour recevoir un fluide à traiter, une sortie (4) pour fournir du fluide au moins partiellement traité, et une interface pour recevoir une cartouche de traitement de fluide remplaçable (2) selon la revendication 1, lequel système comprend :

une interface (19) pour fournir un signal pour entraîner un ajustement de réglages d'un dispositif (20, 8) pour ajuster une fraction de fluide conduit à travers au moins la partie spécifique (10) de l'au moins une partie de traitement de fluide (10, 11) dans un mélange de fluide comprenant en outre du fluide conduit de l'entrée (3) à la sortie (4) de façon à contourner au moins la partie de traitement de fluide spécifique (10) ; et

au moins une interface pour un dispositif (22) pour lire des données à partir de l'étiquette lisible par machine (23) dont la cartouche (2) est munie, le système étant configuré pour mettre en oeuvre un procédé selon l'une quelconque des revendications 4 à 7.

**9.** Système de traitement de fluide comprenant :

un appareil (1) comportant une entrée (3) pour recevoir un fluide à traiter, une sortie (4) pour fournir du fluide au moins partiellement traité, et une interface pour recevoir une cartouche de traitement de fluide remplaçable (2) comprenant au moins une partie de traitement de fluide (10, 11) pour traiter du fluide conduit à travers la partie de traitement de fluide (10, 11) ;

un système selon la revendication 8 ;

le dispositif (20, 8) pour ajuster la fraction de fluide conduit à travers au moins la partie spécifique (10) de l'au moins une partie de traitement de fluide (10, 11) le long d'un premier trajet de fluide dans le mélange de fluide comprenant en outre du fluide conduit de l'entrée (3) à la sortie (4) le long d'un second trajet de fluide de façon à contourner au moins la partie de traitement de fluide spécifique (10) ;

le dispositif adoptant la forme d'un diviseur de débit à rapport variable vers lequel, en utilisation, de l'eau est reçue à travers l'entrée (3), et où les premier et second trajets de fluide se séparent,

le dispositif pour lire des données à partir de l'étiquette lisible par machine (23) dont la cartouche (2) est munie ; et

un dispositif de capteur (5) pour fournir l'au moins un signal de mesure.

**10.** Programme d'ordinateur comprenant un ensemble d'instructions pour amener le système selon la revendication 8 à mettre en oeuvre un procédé selon l'une quelconque des revendications 4 à 7.

Fig. 1

[cartridge placement detected]

Read capacity data — 24

Read target value — 26

Read parameters — 27

[Capacity used up or cartridge unsuitable]

[Capacity remaining and cartridge suitable]

[Target value represents hardness]

[Target value represents blending fraction]

Determine hardness of untreated water — 31

Determine required adjustment — 32

Track capacity use — 30

Adjust blending fraction — 28

Adjust blending fraction — 33

Track capacity use — 29

[capacity remaining]

[capacity remaining]

[capacity used up]

[capacity used up]

Provide output signal — 25

Fig. 2

34   36   37   35

38

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010099910 A2
- US 20060060512 A1
- EP 1834927 A1
- EP 2013067761 W
- EP 2013064112 W
- EP 2013067759 W